Europäisches Patentamt

European Patent Office

Office européen des brevets

(11) Veröffentlichungsnummer: **0 186 850**

**A1**

# (12) EUROPÄISCHE PATENTANMELDUNG

(21) Anmeldenummer: 85116112.5

(22) Anmeldetag: 17.12.85

(51) Int. Cl.⁴: **H02P 6/02**

(30) Priorität: 20.12.84 DE 3446644

(43) Veröffentlichungstag der Anmeldung:
09.07.86 Patentblatt 86/28

(84) Benannte Vertragsstaaten:
AT CH DE FR GB IT LI NL SE

(71) Anmelder: **Siemens Aktiengesellschaft**
**Berlin und München Wittelsbacherplatz 2**
**D-8000 München 2(DE)**

(72) Erfinder: **Berghammer, Maximilian, Dipl.-Ing. (FH)**
**Ullerting 3**
**D-8201 Soechtenau(DE)**

(54) Schaltungsanordnung zum Ansteuern eines elektronisch kommutierten Gleichstrommotors.

(57) Zum Ansteuern von unipolar betriebenen Wicklungen (W1 bis W3) eines elektronisch kommutierten Gleichstrommotors ist jeder dieser Wicklungen eine Leistungsendstufe (TR1, R3, C1) zugeordnet, die über einen Analogmultiplexer (AM) in Abhängigkeit von Rotorpositionssignalen (POS) selektiv und in zyklischer Folge angesteuert werden. Die Aussteuerung der Leistungsendstufen wird über eine dem gemeinsamen Eingang (Y) des Analogmultiplexers zugeführte Steuerspannung festgelegt. Die Leistungsendstufen liegen über einen gemeinsamen Vorschaltwiderstand (R2) an Masse, dem bezüglich seines Massenverbindungspunktes ein Steuerwiderstand (R4) parallel geschaltet ist. Dem Steuerwiderstand (R4) ist ein durch externe Ansteuerungssignale bestimmter, dem Soll-Wert des Motorstromes entsprechender Strom eingeprägt. Am Steuerwiderstand (R4) und am Vorschaltwiderstand (R2) fallen damit Spannungen ab, die dem Soll-Wert bzw. dem Ist-Wert des Motorstromes entsprechen und in einem Komparator (K1) verglichen werden, dessen Ausgang an den gemeinsamen Eingang (Y) des Analogmultiplexers (AM) angeschlossen ist.

EP 0 186 850 A1

Schaltungsanordnung zum Ansteuern eines elektronisch kommutierten Gleichstrommotors

Die Erfindung bezieht sich auf eine Schaltungsanordnung zum Ansteuern eines elektronisch kommutierten Gleichstrommotors gemäß dem Oberbegriff des Hauptanspruches.

Elektronisch kommutierte Gleichstrommotoren, oft auch als kollektorlose Gleichstrommotoren bezeichnet, sind allgemein bekannt. Gewöhnlich bildet ein mehrpoliger Permanentmagnet den Rotor und der Stator weist mindestens drei Polschenkel auf, die zugeordnete Motorwicklungen tragen. Der Motor kann als Innen- oder Außenläufer ausgebildet sein, in jedem Fall besitzt er eine feststehende Sensorplatte als Detektor für die Rotorposition, zumeist mit Hallelementen besetzt, die die jeweilige Position des Rotors feststellen. In Abhängigkeit von der Rotorposition werden die Motorwicklungen selektiv in zyklischer Folge mit Hilfe einer Ansteuerungsschaltung an eine Gleichspannungsquelle angeschlossen.

Gleichstrommotoren · dieser Art sind vorzugsweise Kleinmotoren, oft nur in kleineren Serien verwendet, bei denen der Aufwand für die Kommutierung, d. h. die Ansteuerung der Wicklungen bereits einen wesentlichen Anteil an den Gesamtkosten des Produkts darstellt. Deshalb sind bereits eine Vielzahl von Lösungsvorschlägen bekannt, die darauf abzielen, bei hohem Wirkungsgrad den Aufwand für die Kommutierung herabzusetzen, sei es hinsichtlich eines besonders einfachen Aufbaus des Rotorpositionsdetektors mit wenigen Hallelementen oder hinsichtlich der eigentlichen Ansteuerschaltung in Verbindung mit geeigneten Wicklungsanordnungen.

Ein Beispiel für einen solchen Lösungsansatz ist aus der DE-AS 2539625 bekannt, in der ein elektronisch kommutierter Gleichstrommotor mit einem zwei- bzw. vierpoligen Permanentmagneten als Rotor und einem Stator mit drei Statorwicklungen bzw. drei Paaren von Statorwicklungen beschrieben ist, die in Serie oder parallel geschaltet sind. Bei diesem bekannten kollektorlosen Gleichstrommotor soll die Kommutierung durch nur zwei Hallelemente erfolgen. Unabhängig davon ist der hier beschriebene Gleichstrommotor ein Beispiel für die Gruppe von elektronisch kommutierten Motoren mit unipolarer Ansteuerung, bei der die Ströme durch die Statorwicklungen immer nur in einer Richtung fließen, was die Ansteuerung vereinfacht.

Im allgemeinen kann man davon ausgehen, daß bei solchen elektronisch kommutierten Gleichstrommotoren insbesondere kostengünstige Lösungen unter Hintansetzung anderer Faktoren angestrebt werden. Jedoch gibt es auch Anwendungsfälle, bei denen neben den Herstellungskosten insbesondere auch die technischen Merkmale eine besondere Bedeutung erlangen. Es kann notwendig sein, die Ansteuerung des Gleichstrommotors so auszubilden, daß ein schneller Hochlauf gewährleistet ist und dann auch die Drehzahl präzise geregelt werden kann, insbesondere eine vorbestimmte Nenndrehzahl möglichst exakt konstant gehalten wird. Es kann weiterhin möglich sein, daß der Gleichstrommotor mehr oder minder gekapselt in ein Gerät eingebaut wird, so daß dann die Verlustleistung im Motor und der zugehörenden Ansteuerungsschaltung möglichst gering gehalten werden muß, damit auch die aus dieser Verlustleistung resultierende und abzuführende Wärmemenge in Grenzen bleibt. Weiterhin kann eine hohe Zuverlässigkeit und Fehlersicherheit gefordert werden und um dies zu erreichen, mag es sinnvoll erscheinen, daß die Ansteuerungsschaltung mit einer externen Fehlerlogik zusammenarbeitet. Die herkömmlichen Ansteuerungs-schaltungen für kollektorlose Gleichstrommotoren mögen, für sich betrachtet, zwar einzelne dieser Forderungen erfüllen, jedoch sind sie nach ihrem Aufbau und ihrer Struktur weniger geeignet, der Gesamtheit dieser summarisch erwähnten Randbedingungen Rechnung zu tragen.

Der vorliegenden Erfindung liegt · daher die Aufgabe zugrunde, eine Schaltungsanordnung zum Ansteuern eines elektronisch kommutierten Gleichstrommotors gemäß dem Oberbegriff des Hauptanspruches zu schaffen, die von ihrem Konzept her geeignet ist, bei geringem Bauelementeaufwand mit externen Regler- bzw. Fehlerprüfeinheiten zusammenzuarbeiten, um damit eine möglichst verlustlose, präzise und dennoch sichere Regeleinrichtung für einen derartigen Gleichstrommotor zu erzielen.

Bei einer Schaltungsanordnung zum Ansteuern eines elektronisch kommutierten Gleichstrommotors der oben bezeichneten Art wird diese Aufgabe erfindungsgemäß mit den im Kennzeichen des Hauptanspruches beschriebenen Merkmalen gelöst. Basierend auf der Annahme, daß ein dreiphasig ausgebildeter Motor, der unipolar angesteuert wird, Verwendung findet, werden nur drei Leistungsendstufen eingesetzt, die über einen analogen Multiplexer selektiv und in zyklischer Folge angesteuert werden und mit eingeprägtem Motorstrom arbeiten, wodurch die Motorverlustleistung minimiert wird. Dabei fügt sich der Analogmultiplexer in einfacher Weise in die Stromregelschleife ein. Wie Weiterbildungen der Erfindung zeigen, kann dabei auch ein Aktivierungs- bzw. Deaktivierungs-Eingang des Analogmultiplexers benutzt werden, um die Leistungsendstufen hochohmig zu schalten und damit mit Sicherheit ein fehlerhaftes Anlaufen des Gleichstrommotors zu verhindern. Der Analogmultiplexer hat den weiteren Vorteil, daß seine Betriebsspannung und sein Signalpegel relativ hoch liegen und damit ein hoher Störabstand für die von den Hallelementen abgegebenen Positionssignalen erzielt wird. Wegen dieser Eigenschaft des Analogmultiplexers, der damit im wesentlichen die Signalpegel in der Ansteuerungsschaltung bestimmt, sind Maßnahmen zur Pegelanpassung für Eingangs- bzw. Ausgangssignale der Ansteuerungsschaltung getroffen, so daß diese Schaltungsanordnung auch mit externen, unter Umständen auch programmgesteuerten Regel- bzw. Fehlerprüfschaltungen, die niedrigere Betriebsspannung bzw. Signalpegel aufweisen, zusammenarbeiten kann.

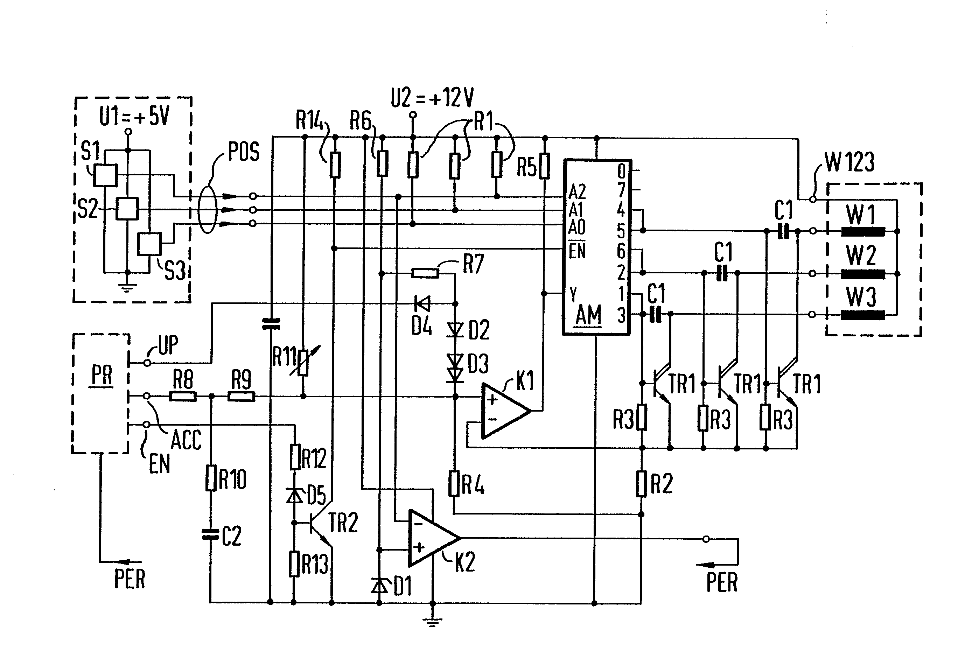

Ein Ausführungsbeispiel der Erfindung wird im folgenden anhand der Zeichnung näher beschrieben. Dabei zeigt die einzige Figur ein Blockschaltbild einer erfindungsgemäßen Schaltungsanordnung zum Ansteuern von kollektorlosen Gleichstrommotoren in Verbindung mit entsprechenden Schaltungsdetails eines solchen Motors, insoweit sie für das Verständnis der Erfindung von Bedeutung sind.

Kollektorlose Gleichstrommotoren werden elektronisch kommutiert, d. h. den einzelnen Wicklungen des Motors wird alternierend in Abhängigkeit von der jeweiligen Rotorstellung Strom zugeführt. Üblicherweise geschieht das mit Hilfe von entsprechend geschalteten Leistungstransistoren. Für das gewählte Anwendungsbeispiel ist der Motor selbst dreiphasig ausgeführt, d. h. es sind in einer Sternschaltung drei Motorwicklungen W1, W2 bzw. W3 vorgesehen, die unipolar betrieben werden. Der gemeinsame Sternpunkt W123 liegt an Betriebsspannung U2 = + 12 V. In herkömmlicher Weise ist in den Gleichstrommotor eine Sensorplatte integriert, die mit drei Hallelementen S1, S2 bzw. S3 bestückt ist. Bei der Umdrehung des Motors geben diese Hallelemente, wie bekannt, Ausgangssignale ab, die hier als Positionssignale POS bezeichnet werden, da sie, wie bekannt, in codierter Form eine Information über die jeweilige Position des Rotors beinhalten.

Diese dem Gleichstrommotor zuzuordnenden Schaltungsdetails sind hier in mit unterbrochenen Linien angedeuteten Blöcken nur schematisch dargestellt, da sie an sich keinen Teil der Erfindung bilden. In eben dieser Weise enthält die Zeichnung einen weiteren, mit PR bezeichneten Block, der einen externen Regler schematisch andeutet. Dieser kann z. B. als Mikroprozessor ausgebildet sein, dessen Programmierung es gestattet, aus einzelnen Kriterien entsprechende Signale abzuleiten, die der Ansteuerungsschaltung als externe Steuersignale zugeführt werden.

Die Positionssignale POS werden Adreßeingängen A0 bis A2 eines analogen Multiplexers/Demultiplexers zugeführt, der hier mit Hilfe des z. B. von der Firma Motorola hergestellten integrierten Schaltkreises MC 14051B realisiert werden kann. Dieser Schaltkreis, der im folgenden Analogmultiplexer AM bezeichnet ist, weist acht Kanäle auf, d. h. besitzt acht unabhängige Ein/Ausgänge, die im Ausführungsbeispiel nur als Signalausgänge verwendet werden und mit 0 bis 7 bezeichnet sind, sowie einen gemeinsamen Ein/ Ausgang Y, der dementsprechend nur als Eingang benutzt wird. Die an den Adreßeingängen A0 bis A2 anstehende Signalkombination wird als Auswahlsignal für einen der unabhängigen Ausgänge decodiert, der damit selektiert ist und elektrisch auf den gemeinsamen Eingang Y durchgeschaltet wird.

Im vorliegenden Anwendungsfall geben die mit einer niedrigeren Betriebsspannung U1 = 5 V betriebenen Hallelemente S1, S2 bzw. S3 jeweils Ausgangssignale ab, deren Zustand das Gegenüberliegen eines Nord- bzw. eines Südpoles des Permanentmagneten des kollektorlosen Gleichstrommotors anzeigt. Da im Ausführungsbeispiel die Ausgangsschaltungen der Hallelemente als Schaltungen mit offenem Kollektor ausgebildet sind, ist an jeden dieser Ausgänge ein eigener Arbeitswiderstand R1 angeschlossen, der andererseits an der ersten Betriebsspannung U2 liegt und damit das Signal auf den Pegel des Analogmultiplexers AM hochzieht. Neben der reinen Pegelanpassung wird damit zugleich eine Verbesserung des Störabstandes erreicht. Mit Hilfe der so den Adreßeingängen A0 bis A2 des Analogmultiplexers AM zugeführten Positionssignale POS wird einer der acht unabhängigen Ausgänge selektiert. Sechs dieser Ausgänge sind jeweils paarweise parallel geschaltet. Entsprechend der Darstellung im Blockschaltbild ist diese Paarung aufgrund der Funktionstafel des bekannten Schaltkreises derart gewählt, daß ein parallel geschaltetes Paar von Ausgängen selektiv und in zyklischer Reihenfolge immer dann aktiviert ist, wenn zwei der drei Positionssignale POS in zyklischer Vertauschung gerade unterschiedliche Zustände aufweisen. Dieses Schaltungsschema ergibt sich in bekannter Weise aus den Regeln für die elektronische Kommutierung.

An jeden dieser paarweise zusammengeschalteten Ausgänge ist eine Leistungsendstufe TR1, R3, C1 angeschaltet, die in Form einer Darlington-Schaltung ausgebildet ist. In jeder dieser Leistungsendstufen ist ein Leistungstransistor TR1 mit seiner Basis direkt und parallel an die beiden zugeordneten unabhängigen Ausgänge des Analogmultiplexers AM angeschlossen. Die Kollektor-Emitter-Strecke dieses Leistungstransistors TR1 ist einerseits an die zugeordnete Wicklung W1, W2 bzw. W3 und andererseits über einen allen Leistungsendstufen gemeinsam zugeordneten Vorschaltwiderstand R2 an Masse gelegt. Zwischen Basis und Emitter jedes Leistungstransistors TR1 ist ein Basis-Emitter-Widerstand R3 angeordnet, der im nicht selektierten Zustand der Leistungsendstufe den entsprechenden Leistungstransistor TR1 mit Sicherheit sperrt. Schließlich ist zwischen dem Kollektor jedes der Leistungstransistoren TR1 und dem zugeordneten, parallel geschalteten Paar von Ausgängen des Analogmultiplexers AM jeweils ein Glättungskondensator C1 angeschlossen. Diese Kapazität sorgt für ein Verschleifen der Flanken des Stromimpulses bei Ein- bzw. Ausschaltvorgängen des zugeordneten Leistungstransistors TR1.

Damit ist zwar erläutert, wie die drei im Stern geschalteten Wicklungen W1, W2 und W3 des Motors phasenrichtig mit eingeprägtem Strom versorgt werden, jedoch ist bisher über die Steuerung des Motorstromes i und damit auch die Geschwindigkeitsregelung des Gleichstrommotors noch nichts ausgesagt. Dies wird im folgenden nachgeholt. Der Ist-Wert des Motorstromes i ist dem Spannungsabfall an den drei Leistungsendstufen gemeinsamen Vorschaltwiderstand R2 proportional. Dieser Spannungsabfall wird mit Hilfe eines ersten Komparators K1 mit einer Steuerspannung verglichen, die an einem weiteren Widerstand R4 abfällt, der hinfort als Steuerwiderstand bezeichnet wird. Dieser Widerstand und der Vorschaltwiderstand R2 liegen einerseits gemeinsam an Masse, andererseits sind sie jeweils mit einem der beiden zueinander inversen Komparatoreingänge des Komparators K1 verbunden. Der Komparator K1 vergleicht die beiden, seinen Eingängen zugeführten Spannungen und gibt ein dementsprechendes Ausgangssignal ab.

Im dargestellten Ausführungsbeispiel ist angenommen, daß die Ausgangsstufe dieses Komparators einen offenen Kollektor aufweist und deshalb ist zwischen die Betriebsspannung U2 und den Komparatorausgang ein weiterer Arbeitswiderstand R5 eingeschaltet, der das Signal am Komparatorausgang auf den Pegel des Analogmultiplexers AM hochzieht. Gleichzeitig ist der Komparatorausgang direkt mit dem gemeinsamen Eingang Y des Analogmultiplexers AM verbunden. Damit wird der Leistungstransistor TR1 einer selektierten Leistungsendstufe, an seiner Basis so mit Strom versorgt, daß sich Spannungsgleichheit ergibt. Das bedeutet mit anderen Worten, daß der Motorstrom i durch das Verhältnis aus der an dem Steuerwiderstand R4 abfallenden Steuerspannung und dem Wert des Vorschaltwiderstandes R2 ergibt.

Die daraus resultierende Aufgabe besteht nun darin, dem Steuerwiderstand R4 einen entsprechenden Strom einzuprägen. Dies geschieht im wesentlichen über zwei externe Steuereingänge der Ansteuerungsschaltung, die mit dem Regler PR verbundenen Eingänge UP und ACC, in Verbindung mit einem an den Steuerwiderstand R4 angeschlossenen Dioden-Widerstands-Netzwerk. Dieses Netzwerk enthält zunächst einen weiteren Widerstand R6 und eine Diode D1, die in Reihenschaltung zwischen Betriebsspannung U2 und Masse so angeordnet sind, daß an ihrem Verbindungspunkt eine stabilisierte Gleichspannung auftritt. Diese stabilisierte Gleichspannung wird über eine Widerstands-Dioden-Kombination, bestehend aus einem weiteren Widerstand R7 und Dioden D2 und D3, dem Steuerwiderstand R4 zugeführt. An den Verbindungspunkt zwischen dem weiteren Widerstand R7 und der Diode D2 ist eine Koppeldiode D4 angeschlossen, die andererseits mit dem ersten Steuereingang UP verbunden ist. Diese Maßnahme sichert die elektrische Anschlußkompatibilität zu den meisten digitalen Schaltkreisfamilien.

Sobald an diesen ersten Steuereingang UP ein ausreichend hohes positives Potential (= logischer H-Pegel) angelegt wird, ist die Koppeldiode D4 gesperrt, damit wird der durch die stabilisierte Gleichspannung und den Wert des Widerstandes R7 vorgegebene Strom dem Steuerwiderstand R4 eingeprägt. Aufgrund dieses eingeprägten Stromes wird der Leistungstransistor TR1 in einer selektierten Leistungsendstufe TR1, R3 voll durchgesteuert, d. h. die Leistungsendstufe zieht maximalen Strom und bewirkt damit den schnellsten Hochlauf des Gleichstrommotors, der praktisch möglich ist. Ist im umgekehrten Fall an diesen ersten Steuereingang UP ein niedriges Potential ( = logischer L-Pegel) gelegt und damit die Koppeldiode D4 in Durchlaßrichtung vorgespannt, so wird der eingeprägte Strom über diese Diode abgeleitet. Damit ist die Diode D3 gesperrt und der Steuerwiderstand R4 stromlos.

Der eigentliche Steuereingang für den geregelten Betrieb ist der zweite Steuereingang ACC. An diesen zweiten Steuereingang ist ein T-Glied, bestehend aus drei weiteren Widerständen, den Längswiderständen R8 und R9 und dem Querwiderstand R10, sowie einem weiteren Kondensator C2 angeschlossen. Der Kondensator C2 ist zwischen dem Querwiderstand R10 und Masse angeordnet. Der dem zweiten Steuereingang ACC abgewandte Anschluß des zweiten Längswiderstandes R9 ist einerseits an den Steuerwiderstand R4 und andererseits über einen abgleichbaren Widerstand R11 an positive Betriebsspannung U2 angeschlossen.

Das dem zweiten Steuereingang ACC zugeführte Regelsignal ist ein digitales Signal mit einem Niedrigpegel von 0 V und einem Hochpegel von + 5 V. Ein hoher Pegel des zweiten Steuersignals ACC prägt dem Steuerwiderstand R4 einen Strom ein, der eine Erhöhung des Nennstromes $i_N$ um einen Betrag $\Delta i$ und damit eine entsprechende Beschleunigung des Motors bewirkt. Im umgekehrten Fall wird der Nennstrom $i_N$ bei Niedrigpegel des zweiten Steuersignals ACC um einen Betrag $\Delta i$ verringert und damit der Motor verzögert.

Ein Abgleich des dem Steuerwiderstand R4 eingeprägten Stromes auf den Nennwert $i_N$ erfolgt nun dadurch, daß dem zweiten Steuereingang ACC bei diesem Einstellvorgang ein Potential von + 2,5 V zugeführt wird und der abgleichbare Widerstand R11 so eingestellt wird, daß der dem Nennbetrieb, bzw. der Nenngeschwindigkeit des Gleichstrommotors entsprechende Nennwert $i_N$ für den Motorstrom erreicht wird. Die Ansteuerung wird durch das aus dem Querwiderstand R10 und dem zweiten Kondensator C2 gebildete RC-Glied verbessert, das die Schleifenverstärkung des Drehzahlregelkreises bei hohen Frequenzen reduziert und damit die Regelstabilität erhöht. Darüber hinaus wirkt der zweite Kondensator C2 als Integrator für das dem zweiten Steuereingang ACC zugeführte breitenmodulierte Impulssignal, so daß dieses digitale Signal in die eigentliche analoge Steuerspannung zur Regelung des Motorstromes umgeformt wird.

Schließlich weist die dargestellte Ansteuerungsschaltung noch einen dritten externen Steuereingang EN auf, der wiederum an den Regler PR angeschlossen ist. Das über diesen dritten Steuereingang EN zugeführte Signal ist das eigentliche Aktivierungssignal für die Ansteuerungsschaltung. Es wird einer Transistorschaltstufe TR2 über ein Basis-Emitter-Netzwerk, bestehend aus einer Reihenschaltung von zwei weiteren, über eine weitere Diode D5 verbundenen Widerständen R12 und R13 zugeführt. Die Emitter-Kollektor-Strecke der Transistorschaltstufe TR2 liegt zusammen mit einem Kollektorwiderstand R14 zwischen der Betriebsspannung U2 und Masse. Außerdem ist der Kollektor mit einem Aktivierungseingang $\overline{EN}$ des Analogmultiplexers AM verbunden.

Das an den dritten Steuereingang EN angeschlossene Schaltnetzwerk dient zunächst einer Pegelanpassung zwischen dem Ausgangssignal des Reglers PR und dem Eingangssignal des Analogmultiplexers AM, davon abgesehen aber wird durch das zugeführte Aktivierungssignal der Schaltzustand der Leistungsendstufen TR1, R3 bestimmt. Denn bei einem Niedrigpegel des diesem dritten Steuereingang EN zugeführten Steuersignales ist der Analogmultiplexer AM grundsätzlich gesperrt, so daß auch keine der Leistungsendstufen ausgesteuert werden kann. Nur bei hohem Pegel am dritten Steuereingang EN wird die Ansteuerungsschaltung aktiviert. Dabei ist die Schaltschwelle durch die Basis-Emitter-Spannung an der Transistorschaltstufe TR2 bestimmt, die mit dem beschriebenen Widerstands-Dioden-Netzwerk R12, R13, D5 festgelegt wird.

Schließlich ist, wie in der Zeichnung dargestellt, ein zweiter Komparator K2 vorgesehen, der ein dem Regler PR zugeführtes Referenzsignal PER erzeugt, das der momentanen Drehzahl des gesteuerten Gleichstrommotors entspricht. Dazu wird einem der beiden Eingänge dieses zweiten Komparators K2 die oben beschriebene stabilisierte Gleichspannung und dem zweiten Komparatoreingang eines der Positionssignale POS zugeführt. Wie eingangs erläutert, sind die dem Analogmultiplexer AM zugeführten Positionssignale auf den hohen 12V-Pegel der Betriebsspannung U2 gezogen, andererseits sind die Eingangssignale für den Regler PR TTL-Signale mit einem Pegel von 5 V. Der zweite Komparator K2 formt dabei aus dem ihm zugeführten Positionssignal POS durch Vergleich mit der stabilisierten Gleichspannung als Referenzspannung ein Steuersignal mit herabgesetztem Pegel, das im Regler PR zur Periodendauermessung benutzt wird. D. h. aus dem Referenzsignal PER wird die momentane Ist-Drehzahl des Motors abgeleitet, wobei dann der Regler PR ein Abweichen von einer festgelegten Nenndrehzahl feststellt und für eine Korrektur das dem zweiten Steuereingang ACC zugeführte Regelsignal mit entsprechender Polarität erzeugt.

Die beschriebene Ansteuerschaltung läßt sich für einen Ausgangsstrom von weniger als 3 A monolithisch integrieren. Für den Fall, daß größere Ausgangsströme gefordert werden, ist eine Integration in Form einer Schichtschaltung der praktikable Weg für eine Reduktion des Einbauvolumens. Eine in die Schichtschaltung integrierbare Wärmesenke gestattet es auf konstruktiv einfache Weise, das Problem der Verlustwärme der Leistungsendstufen zu lösen und damit zu einer kostengünstigen Gesamtlösung beizutragen.

**Ansprüche**

1. Schaltungsanordnung zum Ansteuern eines elektronisch kommutierten Gleichstrommotors mit unipolar betriebenen Motorwicklungen, bei der eine Gleichspannungsquelle und jeweils einer Motorwicklung zugeordnete Leistungsendstufen vorgesehen sind, die selektiv und in zyklischer Folge, gesteuert durch ein Auswahlnetzwerk, in Abhängigkeit von zugeführten Rotorpositionssignalen die Gleichspannungsquelle an die zugeordnete Motorwicklung anschalten, **dadurch gekennzeichnet** , daß in dem Auswahlnetzwerk ein mehrkanaliger Analogmultiplexer (AM) mit Adreßeingängen (A0 bis A2), denen die Positionssignale (POS) zugeführt werden, mit einem gemeinsamen Eingang (Y), dem eine Steuerspannung zugeführt wird und mit unabhängigen, durch die Kombination der Positionssignale selektierten Ausgängen (0 bis 7) vorgesehen ist, an die die Leistungsendstufen (TR1, R3, C1) angeschlossen sind.

2. Schaltungsanordnung nach Anspruch 1, **dadurch gekennzeichnet**, daß der Analogmultiplexer (AM) einen Aktivierungseingang ($\overline{EN}$) aufweist und ein durch ein externes Einschaltsignal betätigter Schalter (TR2, R12, D5, R13) vorgesehen ist, der zwischen dem Aktivierungseingang und der Gleichspannungsquelle (U2) derart angeschlossen ist,

daß der Analogmultiplexer bei Ausfall des Einschaltsignales mit Sicherheit deaktiviert ist.

3. Schaltungsanordnung nach Anspruch 2, **dadurch gekennzeichnet**, daß der durch das Einschaltsignal betätigte Schalter als Transistorschaltstufe (TR2) ausgebildet ist, deren Emitter-Kollektor-Strecke zusammen mit einem Kollektorwiderstand (R14) zwischen der die Gleichspannungsquelle bildenden Betriebsspannung (U2) und Masse angeordnet ist, deren Kollektor mit dem Aktivierungseingang (EN) des Analogmultiplexers (AM) verbunden ist und die ein Basisnetzwerk aufweist, das zwischen einem das Einschaltsignal empfangenden Steuereingang (EN) und Masse angeordnet ist, eine Entkopplungsdiode (D5) aufweist und derart dimensioniert ist, daß die Transistorschaltstufe (TR2) bei Ausfall des über den Steuereingang (EN) zugeführten Einschaltsignales in einem Zustand gehalten wird, der den Analogmultiplexer sperrt.

4. Schaltungsanordnung nach einem der Ansprüche 1 bis 3, **dadurch gekennzeichnet**, daß ein Komparator (K1) vorgesehen ist, dessen Ausgang an den gemeinsamen Eingang (Y) des Analogmultiplexers (AM) zum Zuführen der Steuerspannung angeschlossen ist, dessen einem Eingang als Bezugsgröße ein dem Ist-Wert des Motorstromes entsprechendes Signal und dessen zweitem Eingang ein Regelsignal zugeführt ist, dessen Potential einem Soll-Wert des Motorstromes entspricht.

5. Schaltungsanordnung nach Anspruch 4, **dadurch gekennzeichnet**, daß der Ausgang des Komparators (K1) außerdem über einen weiteren Widerstand (R5) an Betriebsspannung (U2) angeschlossen ist.

6. Schaltungsanordnung nach einem der Ansprüche 4 bzw. 5, **dadurch gekennzeichnet**, daß in den Stromkreis der Motorwicklungen (W1 bis W3) und der zugeordneten Leistungsendstufen (TR1, R3) ein gemeinsamer Vorschaltwiderstand (R2) eingeschaltet ist, an dem eine dem Ist-Wert des Motorstromes entsprechende Spannung abfällt, die dem einen Eingang des Komparators (K1) als Bezugsgröße zugeführt wird und daß diesem Vorschaltwiderstand bezüglich seines Massenverbindungspunktes ein Steuerwiderstand (R4) parallel geschaltet ist, der andererseits an den zweiten Eingang des Komparators (K1) angeschlossen ist und damit durch eine den Steuerwiderstand zugeführte Spannung ein Strom eingeprägt wird, der dem Soll-Wert des Motorstromes proportional ist.

7. Schaltungsanordnung nach Anspruch 6, **dadurch gekennzeichnet**, daß die Leistungsendstufen je einen Leistungstransistor (TR1) aufweisen, dessen Basis direkt an einen zugeordneten Ausgang des Analogmultiplexers (AM) angeschlossen und außerdem über einen Arbeitswiderstand (R3) mit dem Vorschaltwiderstand (R2) verbunden ist und dessen Emitter-Kollektor-Strecke zwischen dem Vorschaltwiderstand (R2) und einem Schaltungsausgang angeschlossen ist, der seinerseits mit einem Anschluß der zugeordneten Motorwicklung (W1, W2 bzw. W3) verbindbar ist, die über einen Wicklungssternpunkt (W123) an Betriebsspannung (U2) anschließbar ist und daß zwischen den Kollektor des Leistungstransistors und den zugeordneten Ausgang des Analogmultiplexers ein Glättungskondensator (C1) geschaltet ist.

8. Schaltungsanordnung nach einem der Ansprüche 5 bis 7, **dadurch gekennzeichnet**, daß mit dem Verbindungspunkt von Komparator (K1) und Steuerwiderstand (R4) ein andererseits an der Betriebsspannung (U2) liegender, abgleichbarer und entsprechend einem vorgegebenen Nennwert des Motorstromes eingestellter Widerstand (R11) und außerdem ein weiterer Widerstand (R8, R9) verbunden sind, wobei der weitere Widerstand (R8, R9) außerdem an einen externen Steuereingang (ACC) angeschlossen ist, dem ein Regelsignal für den Soll-Wert des Motorstromes zugeführt wird.

9. Schaltungsanordnung nach Anspruch 8, wobei das dem externen Steuereingang (ACC) zugeführte Regelsignal ein breitenmoduliertes digitales Signal ist, das zustandsabhängig eine graduelle Beschleunigung bzw. Verzögerung des Gleichstrommotors auslöst, **dadurch gekennzeichnet**, daß zwischen dem externen Steuereingang (ACC) und dem zugeordneten Eingang des Komparators (K1) ein Widerstands-T-Glied mit zwei Längswiderständen (R8 bzw. R9) und einem Querwiderstand (R10) eingefügt ist, der andererseits über einen Kondensator (C2) an Masse liegt, so daß das breitenmodulierte Impulssignal am Steuereingang in ein analoges Signal umgeformt wird.

10. Schaltungsanordnung nach einem der Ansprüche 8 oder 9, **gekennzeichnet durch** eine stabilisierte Spannungsquelle, die aus einer zwischen Betriebsspannungsquelle (U2) und Masse liegenden Reihenschaltung eines weiteren Widerstandes (R6) und einer weiteren Diode (D1) gebildet ist und deren Verbindungspunkt über einen weiteren Widerstand (R7) und eine vorwärts gerichtete Diodenkombination (D2, D3) an den Verbindungspunkt von Komparator (K1) und Steuerwiderstand (R4) angeschlossen ist und daß ein weiterer externer Steuereingang (UP) vorgesehen ist, der über eine Koppeldiode (D4) mit dem Verbindungspunkt zwischen dem weiteren Widerstand (R7) und der Diodenkombination (D2, D3) verbunden ist und dem ein Regelsignal zum Ansteuern der Leistungsendstufen (TR1, R3) für schnellen Hochlauf des Motors derart zuführbar ist, daß die Koppeldiode (D4) im aktiven Signalzustand gesperrt ist und damit maximaler Steuerstrom dem Steuerwiderstand (R4) eingeprägt ist bzw. im deaktivierten Signalzustand die Koppeldiode (D4) leitet, den eingeprägten Strom abzieht und über die gesperrte Diodenkombination (D2, D3) den Steuerwiderstand (R4) stromlos schaltet.

11. Schaltungsanordnung nach Anspruch 10, **dadurch gekennzeichnet**, daß ein weiterer Komparator (K2) vorgesehen ist, dessen erstem Eingang als Bezugsgröße eine stabilisierte Gleichspannung und dessen zweitem Eingang eines der Positionssignale (POS) zugeführt ist und dessen Ausgang ein impulsförmiges Referenzsignal (PER) abgibt, dessen Periode der momentanen Motordrehzahl proportional ist.

12. Schaltungsanordnung nach Anspruch 11, **dadurch gekennzeichnet**, daß der zweite Eingang des zweiten Komparators (K2) an den Verbindungspunkt zwischen dem Widerstand (R6) und der Diode (D1) der stabilisierten Gleichspannungsquelle angeschlossen ist.

13. Schaltungsanordnung nach einem der Ansprüche 1 bis 12 mit einem Detektor (S1 bis S3) für die Rotorposition, dessen Hallelemente Ausgangsstufen mit offenem Kollektor aufweisen, **dadurch gekennzeichnet**, daß die Adreßeingänge (A0 bis A2) des Analogmultiplexers (AM) außerdem über Arbeitswiderstände (R1) an die Betriebsspannungsquelle (U2) angeschlossen sind.

0 186 850

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 063 497 (MINNESOTA MINING AND MANUFACTURING CO.) * Seite 3, Zeile 16 - Seite 6, Zeile 16; Seite 7, Zeile 6 - Seite 13, Zeile 27; Figuren 1, 2, 5 * | 1,6 | H 02 P 6/02 |
| | --- | | |
| A | FR-A-2 509 545 (KOLLMORGEN TECHNOLOGIES CORP.) * Seite 2, Zeile 4 - Seite 3, Zeile 27; Seite 7, Zeile 35 - Seite 8, Zeile 29; Figur 1 * | 1 | |
| | --- | | |
| A | GB-A-2 067 369 (MATSUSHITA ELECTRIC) * Zusammenfassung; Figur 1 * | 1 | |
| | ----- | | RECHERCHIERTE SACHGEBIETE (Int. Cl.4) |
| | | | H 02 P 6/00 H 02 P 7/00 H 02 K 29/00 |

Der vorliegende Recherchenbericht wurde für alle Patentansprüche erstellt.

| Recherchenort BERLIN | Abschlußdatum der Recherche 07-03-1986 | Prüfer WEIHS J.A. |
|---|---|---|